# EUROPEAN PATENT APPLICATION

(11) **EP 4 721 570 A1**
(43) Date of publication of application: **08.04.2026**
(21) Application number: 25300032.7
(22) Date of filing: 27.03.2025
(51) Int. Cl.: A21D 8/04, A21D 10/00

(54) **MIX FOR THE PRODUCTION OF BREAD PRODUCTS WITH ADJUSTABLE WATER ACTIVITY**

(30) Priority: 01.10.2024 GR 20240100677
(71) Applicant: KARAMOLEGOS BAKERY S.A., 19400 Koropi, Attica (GR)
(72) Inventor: Evangelou, Vasileios, GR-15236 Penteli (GR); Karamolegkos, Ilias Apostolos, GR-15237 Athens (GR)
(74) Representative: Lyberis, Nikolaos

(57) **Abstract**

The present invention relates to a mix for the production of bread products with adjustable water activity (Aw), according to the Chorleywood method. The mix comprises, inter alia, a large amount of natural slow-ripening sourdough to improve the taste, texture and shelf life of the bread products, as well as, the reduction of the fermentation time, vegetable or animal fats to increase the elasticity of the dough to withstand the stresses of the Chorleywood method and increase the uniformity of the structure of the bread products, and hydroscopic agents for regulating the water activity (Aw) of the bread products by binding free-to-migrate water in the bread products. This improves the quality of the produced bread products, which are suitable for use in products with sweet or savory fillings, which are, in turn, suitable for long-term storage outside refrigeration.

## Description

### TECHNICAL FIELD

The present disclosure relates to bread products with adjustable water activity.

### BACKGROUND

Bread has been one of the staple foods of humans in almost all societies, latitudes and longitudes of the earth for about 14,000 years, according to archaeological excavations. The exact date, location and method of making bread for the first time is not known. With the findings so far, the oldest remains of bread were discovered in Jordan during the Stone Age, when our ancestors made flour from wild wheat and barley, mixed it with flour from wild plant roots, added water and baked it in a fire.

Grinding the grains and roots with stones allowed the production of fine-grained flour, which was then mixed with water to produce dough. Natural yeasts, that is, microorganisms found in the atmosphere and in the raw materials from which the flour was made, helped the dough to rise to a certain extent, and then baking the dough on the hot ashes of a hearth or on hot stones produced the bread.

These first breads helped our ancestors improve their diet, thus contributing to their development and the creation of civilization, as bread was mainly made when people gathered for a celebration. As a rule, these first people, who made bread before the advent of agriculture, were hunters and gatherers, and the value of bread in their diet seems to have been the trigger for the transition to agriculture, where they began to cultivate grains with the use of animals. They then domesticated wheat and barley, as well as other cereals, which they used, either alone or in combination, to produce different types of flour and bread.

Today's breads, although based on the same basic recipe, probably bear little resemblance to these first, ancient forms of bread. Both the varieties of cereals used have evolved over the centuries, and recently genetically modified grains are used in the production of flour, and the production methods have become more complex with the aim of producing a multitude of types of bread through controlled conditions, adding yeast or sourdough to ensure the repeatability of the taste, texture, etc. characteristics of the final product. This need for repeatability, as well as the creation of new types of bread, minimizing production time and reducing costs, has led the bakery industry to invent a multitude of new methods of producing bread in absolutely controlled conditions and using standardized raw materials (e.g. type P flour, M. A, etc.).

For example, the need to use low-protein grains in England in earlier decades led to the invention of the Chorleywood method of baking, which achieved the use of available flours to make fluffy and homogeneous bread, easy to slice, which in turn gave impetus to the development of the toast bread industry. However, the most important advantage of the Chorleywood method is the drastic reduction in bread making time, from fermentation to dough ripening, so that it can now be baked to produce the final bread product, thus reducing production costs. While until then the baking process until the production of dough ready for baking lasted up to 24 or more hours for sourdough breads, the Chorleywood method reduced the required time to just 3.5 hours or even to just 50-60 minutes in later improvements. For this reason, the majority of bread production internationally is produced with the Chorleywood method or its variations using a multitude of different raw materials.

The Chorleywood method is based on the use of mixing-kneading machines, which, however, operate at higher speeds of 100 - 120 rpm and exert greater forces-pressures on the dough, transmitting energy to it at a rapid rate so that the dough develops its desired properties in a few minutes. Typically, and depending on the type of flour used, the Chorleywood method uses specialized kneaders which transfer energy of 8.5 -11 Wh/kg of dough or even higher to the dough during mixing of the raw materials. The kneading process depends on the total energy transfer from the mechanical kneader to the dough, which in practice corresponds to a 7'-8' kneading time compared to 15' - 20' for conventional methods and kneaders.

The transfer of larger amounts of energy to the dough in a significantly shorter time compared to conventional methods contributes to the rise in the temperature of the dough, resulting in the alteration of its characteristics (it becomes softer and stickier on its surface) making it more difficult to process. For this reason, the kneaders used in the Chorleywood method have double-walled glycol, or other cooling liquid, circulating walls, which act as heat exchangers in the dough mixing container, maintaining a constant temperature of around 25°C. This temperature is ideal for maintaining the desired characteristics of the dough.

While conventional baking methods are based on the preparation of dough under atmospheric conditions, which allow air to be trapped in the dough, the Chorleywood method (in its later improvements) uses partial vacuum conditions (i.e. lower pressure than atmospheric) during fermentation. The partial vacuum conditions cause the bread to be produced from the dough to have smaller bubbles-cells, which are separated from each other by thinner bread walls. The latter allow the bread to remain soft for a longer period of time, due to their smaller size. This resulting structure allows the creation of fluffy bread with a uniform texture and small cells, suitable for storage for longer periods until consumption.

The fluffy texture of the bread is a result of the pressures exerted by the Chorleywood method kneader on the dough and result in the introduction of a larger amount of air, in order to allow faster and more effective oxidation of the dough. The oxidation of the dough can be further enhanced by the addition of an oxidizing agent, such as ascorbic acid/vitamin C, which can be added to the ingredients to be fermented, and which causes the oxidation of the gluten, which is contained in the flour but is also added to the fermentation mixture as one of its ingredients.

In addition to the oxidizing agent, the dough prepared using the Chorleywood method also contains larger amounts of water and yeast compared to conventional doughs, which also helps to reduce the fermentation time and produce fluffier bread. Small amounts of solid fats, or small amounts of oils in combination with emulsifiers, are also added to the dough ingredients in order to optimize mixing and therefore allow for a reduction in fermentation time.

Research has shown that breads and pastries produced using the Chorleywood method with milled white wheat (up to 85% milled), yeast and water are more likely to cause Irritable Bowel Syndrome (IBS) in those who consume them compared to breads produced with 30% sourdough with a 4-hour rise time or conventional yeast bread with a 16-hour rise time. These studies provide answers to the possible causes of the sharp increase in IBS in all countries in recent decades.

Despite their popularity and the very large market share held by breads produced using the Chorleywood method, consumers often complain that these breads do not taste like bread and resemble the taste of paper, do not have the texture of bread but of a sponge, and are so fluffy that they quickly become soggy from the moisture of the ingredients that are added to produce toast and sandwiches or spread on the bread, especially if the final preparation is not consumed immediately after its preparation.

In recent decades, a very large industry has been created for ready-to-eat sandwiches and spreadable bakery products, with both savory and sweet ingredients. These ready-to-eat products are intended to be stored and consumed hours or even days after their production. However, this storage makes them vulnerable to spoilage and contamination by bacteria, mold, etc., making them potential risks to public health. To minimize this risk, various techniques are used, which to some extent ensure better preservation of prefabricated products until they are consumed. Among them, are preservation in refrigerated conditions (which entails increased cost and limits their availability) or freezing (which alters the taste and texture of the products and makes them unavailable for immediate consumption), sterilization and preservation in modified atmosphere packaging (which increases their shelf life, but only by a few days), the addition of preservatives, etc. additives (which alters the taste and degrades the product, while potentially causing IBS and other health problems in consumers), and drying, smoking and adding salt or sugar as a natural preservative (which, however, alter the taste of the product and create health problems such as increased blood pressure and blood sugar, etc.).

### SUMMARY

It is clear that industrially produced breads and pastries pose many challenges for the industry and present many problems and disadvantages.

The purpose of the present invention is to present a mixture of raw materials, a method of preparing bread and pastries, as well as bread and pastries, which increase the shelf life of the latter outside refrigeration (at room temperature), reduce the time and cost of their preparation, ensure uniform form-texture, improved organoleptic characteristics, texture and taste, and are suitable for the preparation of ready-to-eat spreadable products and sandwich-type products suitable for storage outside refrigeration.

### DETAILED DESCRIPTION

### Water Activity (Aw) and Food Shelf Life

Water activity is an index that represents the percentage of free water in food and can be measured from the water vapor pressure (P) in a sealed packaging material containing the food and from pure water at that temperature. It is defined as the ratio of the vapor pressure (P) in the food to the vapor pressure of pure water (PO) at the same temperature as the food, and is obtained from the equation Aw = P / PO.

Aw is the standard index used in the food industry to determine the necessary storage conditions of a food and its shelf life. When we calculate Aw, we are not measuring the amount of water in a food. In fact, we are measuring the "excess" amount of water that is available for use by microorganisms. Each microorganism has a minimum and optimal Aw to multiply and therefore it is important to take this into account in order to control the growth of pathogenic microorganisms, thus preventing food spoilage. At the same time, Aw can be used to control the chemical and physical stability of a food.

**Table 1** presents examples of Aw for common foods.

**Table 1: Examples of Aw for common foods.**

| **FOOD** | **Aw** (at room temperature, about 25°C) | **FOOD TYPE** |
|---|---|---|
| Pure Water | 1,00 | - |
| Wheat Flour | 0,65 | Bread |
| Yeast Bread | 0,983 | Bread |
| Sourdough Bread | 0,981 | Bread |
| Pitta Bread (Flatbread) | 0,88-0,96 | Bread |
| Koppe-style bread (fluffy bun) | 0,72 | Bread |
| Toast Bread | 0,94-0,98 | Bread |
| Breadsticks | 0,36 | Bakery/Bread Product |
| Croissant | 0,76-0,79 | Bakery/Bread Product |
| Cake | 0,81 | Bakery/Bread Product |
| Sweet, Fatty Filling (dry spread, e.g. hazelnut praline type) | 0,25 | Sweet Filling |
| Sweet, Watery Filling (fruit jam type) | 0,80-0,84 | Sweet Filling |
| Confectionery Icing | 0,78 | Sweet Filling |
| Chocolate | 0,3-0,5 | Sweet Filling |
| Nuts | 0,65-0,75 | Sweet/ Savory Filling |
| Peanut butter | 0,33 | Savory Filling |
| Fresh Meat, fish/seafood | 0,99 | Savory Filling |
| Cheese | >0,94 | Savory Filling |
| Salty Cold Cuts (e.g. salami) | 0,82 | Savory Filling |
| Boiled cold cuts (e.g. turkey) | 0,98 | Savory Filling |

**Table** 1 shows that while wheat flour has a low Aw (0.65), its use in bread production with the addition of yeast, water and other additives produces bread that has a very high Aw (0.94-0.98). If the bread contains fatty substances (oil, butter, nuts, etc.) then the Aw decreases depending on the percentage of fat added. For this reason, baked goods, which generally contain butter or vegetable fats (e.g. palm oil, etc.) in the industry, have a lower Aw (0.76-0.81) than bread.

For the same reason, fatty substances used as fillings in sandwich-type products (e.g. peanut butter, salty cold cuts, etc.) have a moderate Aw of 0.33-0.82. At the same time, savory fillings with low salt content (e.g. boiled turkey and cheeses) have very high Aw (0.92-0.98).

Ingredients used as sweet fillings in sandwich products and other types of baked goods have extremely low Aw (0.25-0.50) when they have a predominantly fatty content (e.g. hazelnut praline, chocolate, etc.) or moderate Aw (0.65-0.78) when they have a predominantly watery content (e.g. nuts, confectionery glaze, etc.).

**Table 2** presents examples of Aw that allow the growth of different types of microorganisms.

**Table 2: Examples of minimum Aw that allow the growth of different types of microorganisms.**

| **MICROORGANISM** | **MINIMUM Aw FOR REPRODUCTION** |
|---|---|
| Clostridium Botulinum | 0,97 |
| Pseudomonas Fluorescens | 0,97 |
| Escherichia Coli | 0,95 |
| Clostridium Perfringens | 0,95 |
| Salmonella | 0,95 |
| Vibrio Cholerae | 0,95 |
| Clostridium Botulinum A, B | 0,97 |
| Bacillus Cereus | 0,93 |
| Listeria Monocytogenes | 0,92 |
| Bacillus Subtilis | 0,91 |
| Staphylococcus Aureus | 0,87 |
| Mold | 0,70 |
| Do not reproduce | <0,60 |

As shown in **Table 2,** most common types of microorganisms reproduce at Aw greater than 0.95 or 0.91 in some cases. Mold reproduces at Aw equal to or greater than 0.70.

These measurements indicate that foods with very high Aw allow the growth of pathogenic microorganisms, making them unfit for consumption.

Referring to **Table 1,** we can easily see that most raw materials that are commonly used in bread products, pastries and sandwich products can grow mold, while a large portion of them can also grow cultures of pathogenic microorganisms.

For this reason, it is necessary to preserve raw materials and finished products in controlled storage conditions before use/consumption, such as refrigeration or freezing, modified atmosphere, pasteurization, etc., or otherwise reduce their shelf life and/or add natural or artificial preservatives, or a combination of the above.

**In** general, if a product has an Aw greater than 0.85, then it is required to be refrigerated or to take another protective measure such as one or more of the above to avoid the growth of pathogenic microorganisms and/or mold.

For products with Aw 0.60-0.85, refrigeration or other measures to protect against the growth of pathogenic microorganisms and mold are not necessary but optional. In this case, however, the product will have a limited shelf life (e.g. a few days, such as 3-4) due to the presence of yeasts and some types of mold in the atmosphere.

For products with Aw less than 0.60, refrigeration or other measures to protect against the growth of pathogenic microorganisms and mold are not necessary. These products have a long shelf life (e.g. weeks or months).

**In** order to increase the shelf life of food products and, depending on the type of food, to avoid the need for refrigeration, food industries use some of the techniques mentioned above to ensure that their products remain safe for consumption. However, as is known to both industries and consumers, the addition of preservatives (whether natural or artificial), as well as drying and pasteurization, alter the taste, texture, organoleptic characteristics of a food and in many cases its appearance and mechanical properties.

For these reasons, it is desirable to industrially produce food products, and in particular bread and bakery products, which will have a longer shelf life than the corresponding products currently available and at the same time will preserve the taste, texture, organoleptic characteristics and mechanical properties of bread in its natural-non-industrialized form.

### Food Combinations with Different Aw

As already mentioned, water activity is an indicator that represents the percentage of free water in food, i.e. the "excess" amount of water that is available for use by microorganisms.

**In** the bakery industry, one of the most widespread uses of bread and other bakery products is in the production of sandwich-type products. Such a product typically consists of two slices of bread with a filling, either savory or sweet, inserted between them. In one variation of these products, a single slice of bread may be used on which the filling is placed, while in another variation, the slice of bread with the filling is folded in half to form a sandwich.

According to the content of **Table 1,** breads and pastries have Aw 0.72-0.98 and more specifically toast bread, which is usually used in the preparation of sandwiches, has Aw 0.94-0.98 depending on the raw materials and the method of its preparation. This bread is preferred due to its characteristics, namely its light texture, its taste, its elasticity and its resistance to mechanical stress, so that it does not rub and maintains the shape of the sandwich. The bread is usually filled with a savory filling (e.g. cheeses and cold cuts) with Aw 0.82-0.98 or with a sweet filling (e.g. nut spread or chocolate) with Aw 0.25-0.84.

It is obvious that the Aw of the bread and the Aw of the filling differ, and to a large extent. It is therefore obvious that since Aw represents the percentage of free water in foods, excess water from foods with a high Aw will move to foods with a lower Aw. Given enough time, the movement of water will continue until equilibrium is reached in the Aw of the bread and the filling.

In the case where the Aw of the bread and the filling are the same or similar (such as if brie cheese is added to toasted bread), no water will move from one material to the other, or any movement will be in an amount such that it does not affect the characteristics of the product, thus maintaining the original quality of the bread and the filling.

In sandwich-type products of the form mentioned above, when the filling has a higher Aw than the bread, the latter will absorb water from the filling, resulting in the bread becoming soggy and the filling becoming dehydrated. The reverse scenario is also possible. In both cases, the result will be a change in the texture and appearance of the product, resulting in the consumer perceiving the product as either potentially hazardous to their health or as having an inferior taste. Thus, it is likely that the consumer will reject this product from future purchases, or that the seller will reject it as unsuitable before selling it. This problem concerns products that are manufactured with the aim of being stored as ready-to-eat and which, depending on their manufacturing method, can be kept in a ready-to-eat form on the shelf (with or without refrigeration).

### Mix of Raw Materials for the Preparation of Bread Dough and Bakery Products

The present invention relates to a mix (mixture) of raw materials for the preparation of bread dough and bakery products which increases the shelf life of bread-bakery products outside refrigeration, reduces the time and cost of its preparation, ensures a uniform structure, improved organoleptic characteristics, texture, taste, elasticity and resistance to mechanical stress and is suitable for the preparation of ready-to-eat spreadable products and sandwich-type products suitable for storage outside refrigeration.

The present innovative technical solution aims to solve the problems of the bakery industry which were mentioned above. The present mix includes a natural slow-ripening sourdough, which provides the final product with superior organoleptic characteristics, upgraded texture and taste of bread, and a longer shelf-life outside refrigeration.

However, since the preparation of bread and pastries using sourdough requires a long period of dough maturation (typically 24-48 hours), the present solution also uses in the mixture of flour, yeast and water, sugar, vegetable fat, wheat starch, gluten and salt. These ingredients of the mixture allow baking with the Chorleywood baking method, which ensures a reduction in the dough maturation time, maintaining a uniform structure of the final product, a light texture with homogeneous holes and makes it suitable for slicing and use in sandwiches and other preparations, while maintaining improved texture and taste of bread, as well as, a longer shelf life without refrigeration.

At the same time, the present mixture also allows the preparation of baked goods with a controlled water activity (Aw) of 0.915-0.925 so that it extends the shelf life of the product by reducing the growth of mold and bacteria, and increasing the chemical and physical stability of the product. Also, controlling the water activity of the final product allows its use in preparations containing savory or sweet fillings, matching the water activity of the bread with the fillings, in order to prevent the exchange of water between the bread and the filling, resulting in the maintenance of the chemical and physical stability of the preparations and consequently the characteristics of the bread and the filling.

**Table 3: Ingredients of bread dough mix and bakery products according to the present invention.**

| **RAW MATERIALS** | **EXEMPLARY EMBODIMENT** | **TECHNICAL EFFECT** |
|---|---|---|
| Slow-Rising Sourdough | 26%-40% wt. (36-48 hours) - (Water: Wheat Flour type 55% or 70% (1:1), Yeast (yeast culture)) | Flavor enhancer (gives a sour taste due to a decrease in the pH of the dough and therefore the bread), bread structure and elasticity enhancer, prolongs its shelf life |
| Water | Filtered or Natural Mineral | |
| Wheat Flour | Type 55% ή 70% | Hard Flour, protein source, suitable for white bread as it contains small amounts of bran, reduces fermentation time |
| Yeast | | Increase in dough and bread volume |
| Sugar | | Flavor enhancer, increases bread consistency and water absorption |
| Vegetable and/or Animal Fats | | Fatty, flavor enhancer, increases the elasticity of the dough so that it can withstand the stresses of fermentation in a short time brought about by the Chorleywood method, gives uniformity to the structure of the bread and consequently improves its elasticity |
| Gluten | | Strengthens the protein matrix of the dough, increases the elasticity of the dough and facilitates the rising of the bread during baking, increases consistency and |
| | | improves the rising of bread so that it can withstand mechanical stress, improves the quality of bread cutting |
| Salt | | Flavor enhancer, bread leavening agent, reduces bread brittleness, hydroscopic agent |

**Table 3** presents the ingredients of the bread and bakery dough mixture according to the present invention, as well as the technical effect that each of them brings.

The elasticity-cohesiveness of the bread can be calculated and compared with that of other types of doughs and breads by any method known in the literature. For example, it can be measured-estimated through:
- measurements of water absorption in the dough mass without changing the sticky characteristics of the dough to an acceptable degree, which is achieved by transferring energy to the dough with a value range from 8.5 to 11Wh/Kg for fermentation according to the Chorleywood method
- measurements of the fermentation time required according to the Chorleywood method (must be <=10 minutes of the hour (10'))
- measurements of dough expansion (>=100% by volume) homogeneously to produce square bread based on the geometric dimensions of a square bread baking pan (the baked bread must uniformly cover at least 95%-99% of the volume of the baking pan)

The improvement of the texture of the bread can be measured by measuring the size of the air cells in the body of the bread. The cells should be uniform in size (approximately 0.6-0.8mm) with a density (approximately 50-100 cells/cm²). The measurement of the size and density of the bubbles can be done visually, manually or using automatic texture analyzers. It is important that the size of the cells in the bread body is smaller than approximately 0.6-0.8mm as larger cells are not suitable for use in the preparation of ready-to-eat sandwich-type products, suitable for storage in or out of refrigeration for long periods (days or weeks) before consumption. If the bread has cells larger than about 1.2mm, these function as pockets for receiving filling (e.g. sweet cream), contributing to the increase in the contact surface of the two phases (bread and cream) resulting in enhanced water exchange between the two phases causing the deterioration of the characteristics of the bread. Even if the Aw of the two phases is approximately the same (0.90-0.92), the effect of small differences in the Aw of the two phases on the water exchange between the two phases is enhanced due to the increase in the contact surface of the two phases due to the cells. Thus, maintaining the cells in the diameter range of approximately 0.6-0.8mm and a density of approximately 50-100 cells/cm² reduces the transfer of water between the bread and the filling, contributing to the preservation of at least 80% of the qualitative-organoleptic characteristics of the bread until the end of the shelf life of the preparation, which shelf life increases to 15-22 days.

The minimum ingredients necessary for the implementation of the invention are about 23%-50% by weight (wt.) water, while the remaining about 50%-77% by weight consists of about 26%-40% by weight natural sourdough ripened for 36-48 hours, yeast, wheat flour, fatty phase (vegetable and/or animal fats about 1.5%-20% by weight, hydroscopic agents such as sugar, which help regulate Aw by preventing water binding) and salt. Optionally, one or more of wheat starch and fava flour, colorants, preservatives and flavorings may also be added.

**Table 4: Nutritional characteristics of the present invention**

| **NUTRITIONAL VALUE** | **General Implementation Example (% wt.)** | **1° EXEMPLARY EMBODIMENT (% wt.)** |
|---|---|---|
| Energy | 240 - 280kcal | 250 kcal |
| Fats | 2.0 - 5.0 | 3,6 |
| of which saturated | 0,1-1,2 | 0,2 |
| Carbohydrates | 45 - 54 | 47,5 |
| Dietary fiber | 2,0 - 2,5 | 2,8 |
| Proteins | 7.5 - 11.0 | 9.0 |
| Salt | 1.0 - 1.2 | 1,1 |

The mixture of raw materials can be varied in the proportion of the above raw materials with the aim of achieving the nutritional characteristics of **Table 4,** General Example. It is known to those skilled in the art how, based on **Table 4,** General Example or 1st Exemplary Embodiment, they can create one or more dough recipes according to the present invention, using the ingredients of the previous paragraph, without requiring experimentation beyond a usual routine of mixing known raw materials with a known nutritional value each.

However, what is neither known nor obvious to the person skilled in the art is the selection and combination of the above-mentioned minimum necessary raw materials and/or optional raw materials in combination with the very high percentage of slow-ripening natural sourdough and the use of vegetable and/or fats. The natural, naturally ripened sourdough improves the organoleptic characteristics of the final product, the taste and texture and extends the shelf life of the final product outside of refrigeration, while at the same time acting as an oxidizing agent which has a rapid action allowing the fermentation of the dough according to the Chorleywood method to minimize the required fermentation and ripening time, without the addition of another oxidizing agent (such as vitamin C/ascorbic acid).

Vegetable and animal fats (e.g. cream containing 35% fat by weight) facilitate breadmaking by the Chorleywood method, imparting a cohesive structure to the final bread product. The fatty structure of the dough helps to form lipophilic regions where water molecules are trapped, inhibiting its leavening ability, but contributing to the formation of a denser and more cohesive crumb structure in the final bread product. In addition, the addition of a fat phase helps to reduce the percentage of water in the mixture and in the produced dough. The increase in the fat phase contributes to the reduction of the available free water of the final product, reducing the Aw. This parameter allows the adjustment of the Aw of the bread to 0.915-0.925, so that it matches the Aw of the filling which can be selected when the bread is used in the manufacture of ready-to-eat filled sandwich products and suitable for long-term storage (days or weeks) outside refrigeration. By adjusting the Aw, the preservation of the filled sandwich for longer periods of time is achieved without altering its components due to the significant reduction (up to practically zeroing) of the exchange of free water between them.

The above values, percentages of components in the mixture, etc. are exemplary implementations of the present invention and are not intended to limit the scope of the intended protection. On the contrary, the novelty of the invention lies in the combination of the different raw materials in the mix in order to obtain the desired properties in the bread produced from the dough and to solve the technical problems mentioned above. It is, therefore, possible for the person skilled in the art to use the aforementioned raw materials and mix and knead them for the purpose of producing bread dough, using different proportions within the limits mentioned in **Table 3** and according to the nutritional characteristics of **Table 4.** In this case, which is also included in the scope of the intended protection, the produced dough and the bread that will be produced from this dough will have the properties mentioned above, to a different extent from each other. However, since the presence of the raw materials in combination with each other gives the dough and bread the desired properties, they are suitable for industrial production and use in sandwich-type products ready for consumption and suitable for preservation outside refrigeration for a long period of time without degradation of their quality, both in terms of their health characteristics and in terms of their organoleptic characteristics and how consumers understand them. Consequently, the modification of the aforementioned proportions, dimensions, etc. falls within the intended protection of the present invention and can be made by the person skilled in the art in order to adapt the dough and bread to specific patterns of use and to produce specific products that meet specific specifications. As the present invention aims to protect all these products, which will have the aforementioned technical characteristics, the implementation examples are not limited to the specific presentation of a mixture of raw materials for specific products but for all products that have the technical characteristics mentioned above. On the contrary, the description of embodiments which can be used in the production of bread suitable for use in potentially all sandwich-type products with filling is desirable by the industry as it solves the problem of producing a wide range of different types of bread, each for a different use. Otherwise, the production of a wide range of different types of bread, each for a different use, could prove to be unfeasible due to the high cost of differentiation of bread production. At the same time, the differentiation of the technical characteristics between these different types of bread would be so small that it would not give the different types of bread any substantial and commercially exploitable advantage or differentiation. Therefore, the present description of the invention covers all possible modifications thereof as long as they use the raw materials mentioned above.

**Table 5: 2nd embodiment of the present invention**

| **Ingredients - 2o Exemplary Embodiment** | **% wt.** |
|---|---|
| Wheat Flour 70% | 32 - 36 |
| Natural Sourdough | 29 - 35 |
| Water | 26 |
| Sugar | 8 - 12 |
| Yeast | 5 - 8 |
| Rapeseed oil | 2 - 4 |
| Gluten | 2 - 4 |
| Cornstarch | 1 - 2 |
| Salt | 0,8 - 1,2 |
| Preservatives | < 0,5 |
| Coloring: beta-carotene | < 0,2 |
| Flavoring | < 0,2 |

**Table 5** shows a second exemplary embodiment of the present invention, in which the ingredients are used in the specific ratio ranges shown. The specific ratios for each of the ingredients in **Table 5** are selected to achieve the nutritional values shown in **Table 4,** General Embodiment. Having knowledge of **Table 4,** General Embodiment and **Table 5,** it is obvious and does not require any experimentation or inventive activity by the person skilled in the art as to what amounts of each ingredient in **Table 5** (can) be selected to achieve nutritional values within the ranges shown in **Table 4,** General Embodiment. This selection of ingredients (from **Table 5** based on **Table 4,** General Embodiment) will simultaneously ensure the desired properties in the present invention, specifically and among others the regulation of the water activity Aw and the other quality characteristics in the final bread product. Therefore, the inventiveness of the present invention lies in the content of **Tables 4** and **5** and in the selection from their contents, as well as, in the combination thereof (selection from two lists).

In the 2nd exemplary embodiment, rapeseed oil is used as a vegetable fat and calcium propionate and/or potassium sorbate are also added as preservatives, β-carotene as a coloring agent, as well as, flavorings. All proportions by weight (wt.) is about.

### Method for Preparing Bread and Bakery Dough

The present invention also relates to a method for preparing bread and bakery products which increases their shelf-life outside refrigeration, reduces the time and cost of their preparation, ensures uniform shape-structure, improved organoleptic characteristics, texture and taste, and is suitable for preparing ready-to-eat spreadable products and sandwich-type products suitable for storage outside refrigeration.

Step 1: Preparation of slow-ripening sourdough. The sourdough production process includes mixing water, wheat flour in a ratio of 50%/50% as well as, adding yeast culture. This mixture remains at rest for a period of 36-48 hours, until it is ready for use in the preparation of bread dough. The final mixture (i.e. the mature sourdough) has a mild but characteristic - special taste and slightly higher acidity due to the lower pH of 4.5 compared to sourdough bread dough (pH 4.7) or yeast bread dough (pH 5.0).

In this way, the sourdough that is produced is a semi-finished traditional product that can also be used for technological purposes, contributing not only to the enhancement of organoleptic characteristics, but also to the extension of the shelf life of the bread to which it will be added.

Step 2: Placing the raw materials (the minimum necessary or optional ones) in the kneading bowl suitable for fermentation according to the Chorleywood method.

Step 3: Mixing-fermenting the raw materials according to the Chorleywood method known from the literature. **Table 5** presents an example of technical characteristics of the Chorleywood fermentation method, which is used in the present invention. The fermentation is carried out in two stages. In the 1st stage, the dough is stirred at high speed (90rpm) without vacuum (i.e. at atmospheric pressure) in order to trap larger amounts of oxygen compared to traditional-other fermentation methods, in a short time (255sec), thus accelerating the oxidation of the dough, which through chemical reactions known in the literature achieves its maturation in a shorter time compared to conventional fermentation methods. In the 2nd stage, the fermentation continues in order to reduce the volume of air bubbles inside the dough, thus producing a more homogeneous and balanced dough, with smaller bubbles compared to traditional-other fermentation methods.

**Table 5: Example of technical characteristics of the Chorleywood fermentation method used in the present invention.**

| **KNEADING PHASE** | **1^{st}** | **2^{nd}** | **3^{rd}** |
|---|---|---|---|
| Kneading Time (sec) | 255 | 100 | 125 |
| Kneading Speed (rpm) | 90 | 110 | 120 |
| Kneading Energy (Wh/kg) | 3 | 9 | 12 |
| Vacuum (mbar) | NO | NO | -600 |
| Air Injection | NO | YES | NO |
| Coolant Temperature (°C) | -5 | -5 | -5 |
| Dough Temperature (°C) | 25 | 25 | 25 |

In both stages of step 3, the temperature of the walls of the kneading machine is maintained constant so that the dough is maintained at a temperature of approximately 24-25°C without its rheological characteristics being affected by external conditions. The duration of the mixing-kneading is not predetermined based on time but on the basis of the work that the dough imparts to the movable members of the kneading machine which transfer energy through their movement to the dough. In practice, the work that the dough imparts to the movable members of the kneading machine is measured through the resistance that the movable members of the kneading machine must overcome to perform the fermentation. Thus, the mixing-fermentation time is practically limited to 7-8.5 minutes of the hour (7'-8.5'), preferably to 7.5' - 8' minutes of the hour (7.5' - 8').

The mixing of the raw materials and fermentation cause and allow a multitude of chemical, microbiological and physical processes in the dough. These include the mixing and hydration of the flour components, the metabolism of the yeast and the enzymatic reactions of the yeast and the sourdough, the entrapment of small gas bubbles in the dough and the development of a gluten network which will give the bread a cohesive and stable structure as it absorbs and assimilates water molecules into its mass to the maximum extent possible.

The dough is now ready and can now proceed to the ripening steps and then be baked for the production of bread.

### Dough Maturation Method for Bread and Bakery Products

In order for the dough to mature and become ready for baking, the following steps are followed after steps 1-3.

Step 4: Volumetric cutting of the dough in a weight-cutting machine and then molding it to the desired shape and weight, preferably in a round shape weighing approximately 950g (grams). This step allows the use of constant parameters in the subsequent steps for each piece of dough so that the characteristics of the derivatives of these steps are repeatable.

Step 5: Placing the volumetrically cut dough in a proofer, i.e. in a first ripening chamber with controlled conditions. Preferably for approximately 5' at approximately 22°C, at a relative humidity of approximately 40%. This stage is not defined as maturation but as a resting stage of the dough. It is noted that the dough, both in the kneader and in the zygo-cutting machine of step 3, suffers from the mechanical stress of the kneading and cutting processes. The pre-rising stage helps the dough to balance before the next production stages follow. More specifically, it helps to assimilate and diffuse the water in the dough mass without it swelling yet.

Step 6: Placing the dough (volumetrically cut) in baking containers (molds) and passing them to a proofer, that is, a second ripening chamber with controlled conditions. Preferably for about 60' (or more) at about 37°C, at a relative humidity of about 58%. After this time, the baking containers, together with the dough contained, are removed from the second ripening chamber, after the dough volume has at least doubled.

The dough is now ripe and ready to bake.

### Bread and Pastry Preparation Method

In order for the prepared dough to be prepared into bread or pastries, the following steps are followed.

Step 7: Place a lid on the baking containers and place them in a baking oven under controlled conditions. Preferably for about 29'-30' at about 360°C (burner temperature), giving the final product an exit temperature inside the pastry of about 96°C-98°C (preferably about 98°C).

The use of a lid is optional and is used when the production of a predetermined shape of bread or pastry (e.g. square) is required. Closing a baking container with a lid creates a confined volume within which the increase in volume of the bread during baking is limited, resulting in the baked bread taking the three-dimensional shape of the volume defined by the walls of the baking container and the lid. This is useful when, for example, the bread is to be sliced and then subjected to a cutting and crust removal process. The predetermined shape of the bread facilitates cutting and crust removal, reducing waste and rejections of the final product due to incomplete crust removal.

Step 8: Exit the baking containers with the contained breads (i.e. the contained baked dough) from the oven, remove the cover, lift and remove the breads from the mold.

Step 9: Transfer the breads to a high-sanitary care cooling chamber with controlled temperature and humidity. Preferably for about 70'-80', at about 20-25°C, at a relative humidity of about 60%.

The breads/pastries are now ready for packaging, storage and consumption but also for further processing for slicing, crust removal, etc.

The aforementioned proportions, as well as the temperatures, pressures and times are indicative and "approximate". Likewise, their modification is considered to fall within the scope of protection of the present innovative solution to the extent that these modifications are obvious to persons skilled in the relevant technical level and to the extent that these modifications are equivalent to the implementation examples presented or do not add tangible and unexpected or non-obvious improvements to the technical result they offer. Thus, the present text is not intended to be limited only to the exemplary implementations of the invention presented but should be given the widest possible scope in accordance with the principles and novel features it discloses.

The examples used above to describe the present innovative solution should not be considered as limiting the scope of application of the present innovative solution. The present innovative solution can be applied to other scenarios and settings than those described in the examples presented above. The present innovative solution should be considered as applicable to any type of bread or bakery product.

The average person with relevant knowledge of the prior art understands that the shape, proportions and dimensions of the parts of the present invention, as presented in the exemplary embodiments, can be modified without departing from the scope and intended protection of the present invention.

The above descriptions of exemplary embodiments are simplified and do not include parts or steps that are used in the implementation but do not form part of the present invention, are not necessary for understanding the invention and are obvious to an average person with relevant knowledge of the state of the art related to the invention. In addition, variations of the exemplary embodiments are possible where, for example, certain elements of the exemplary embodiments can be rearranged, omitted and replaced with equivalents or new ones can be added, as well as, existing elements can be mixed in a different way than that described, provided that the different mixing is compatible with the technical effect that the elements of the invention have, being technical features of the invention. Similarly, the modification of the shape and dimensions of the presented parts is considered to fall within the scope of protection of the present innovative solution to the extent that these modifications are obvious to persons skilled in the relevant art and to the extent that these modifications are equivalent to the examples of implementation presented or do not add tangible and unexpected or non-obvious improvements to the technical result they offer. Thus, the present text is not intended to be limited only to the examples of implementation of the invention presented but should be given the widest possible scope in accordance with the principles and novel features it discloses.

Unless specifically stated otherwise, the inventor's intention is to give the words and phrases mentioned in the description of the invention and in the claims the ordinary and commonly accepted meanings attributed to the average person with relevant knowledge of the state of the art related to the present invention.

The foregoing description of a preferred embodiment and the best mode of carrying out the invention known to the applicant at the time of filing the application has been presented and is intended for the purposes of illustration and description. It is not intended to be exhaustive or to limit the invention to the precise form disclosed and many modifications and variations are possible in light of the above teachings. The exemplary embodiments were chosen and described to best explain the principles of the invention and its practical application and to enable others skilled in the relevant art to best utilize the invention in various application scenarios and modes of use and with various modifications as are appropriate to the particular use contemplated. Therefore, it is intended that the invention is not limited to the specific details disclosed for carrying out the invention, but that the invention includes all that fall within the scope of the appended claims.

## Claims

1. Mixture for producing bread products with adjustable water activity (Aw), according to the Chorleywood method, the mixture comprising following raw materials:
oxidizing agent for reducing fermentation time, and improving characteristics and shelf life of the bread products;
yeast;
wheat flour;
fatty phase for increasing dough elasticity and uniformity of the bread products' structure;
hydroscopic agents for regulating Aw by preventing water binding in the bread products; and
salt for swelling and cohesive structure, and for reducing friability and the Aw of the bread products;
wherein (a) the oxidizing agent is a natural sourdough ripened for 36-48 hours, which includes water and wheat flour in a ratio of 1:1, and yeast culture, and is included in the mixture in a ratio of approximately 26%-40% wt., (b) the fatty phase is 1.5%-20% wt., and (c) the hydroscopic agents are sugar, and wherein the ratios of the raw materials of the mixture are selected for ensuring that the produced bread products have an Aw of 0.915-0.925 and contain nutrients of approximately, per 100gr, 240 - 280kcal of energy. 2.0 - 5.0gr of fat, of which 0.1 -1.2gr are saturated fat, 45-54gr of carbohydrates, 2.0 - 2.5gr of dietary fibers, 7.5 - 11.0gr of protein, and 1.0-1.2gr of salt.

2. A mixture according to claim 1, the mixture further comprising at least one raw material of wheat or corn starch, gluten, and fava flour.

3. A mixture according to any one of the preceding claims, wherein the ratios of the raw materials of the mixture are selected for ensuring that the produced bread products contain approximately, per 100gr, 250kcal of energy, 3.6g of fat, of which 0.2g of saturated fat, 47.5g of carbohydrates, 2.8g of dietary fibers, 9.0g of protein, and 1.1g of salt.

4. Mixture according to claim 1, the mixture further comprising preservatives calcium propionate and/or potassium sorbate, coloring agent β-carotene, flavoring agent, gluten, and corn starch, wherein the wheat flour is of the 70% type, the fatty phase is rapeseed oil, and the raw materials are comprised in the following proportions:
wheat flour about 32-36% wt.;
natural sourdough about 29-35% wt.;
sugar about 8-12% wt.;
yeast about 5-8% wt.;
rapeseed oil about 2-4% wt.;
gluten about 2-4% wt.;
corn starch about 1-2% wt.;
salt about 0.8-1.2% wt.;
preservatives about < 0.5% wt.;
colorant: beta-carotene about < 0.2% wt.; and
flavoring about < 0.2% wt.

5. Dough for producing a bread product of adjustable water activity (Aw), according to the Chorleywood method, the dough comprising 23%-50% wt. water and 77%-50% wt. mixture according to any of claims 1-4.

6. A method for preparing a dough for producing a bread product of adjustable water activity (Aw), according to the Chorleywood method, the method comprising the following steps:
adding about 77%-50% wt. of a mixture according to any of claims 1-4 and about 23%-50% wt. of water to a fermentation machine according to the Chorleywood method for producing dough;
stirring the dough at a speed of about 90rpm, at atmospheric pressure, for about 255sec for accelerating the oxidation of the dough by the sourdough, and for maintaining the dough at about 25°C;
stirring the dough at a speed of about 110rpm, at atmospheric pressure, for about 100sec for reducing the volume of air bubbles inside the dough, for supplying air to the dough, and for maintaining the dough at about 25°C; and
stirring the dough at a speed of about 120rpm, in a partial vacuum of about -600 mbar, for about 125sec for developing a gluten network, and for maintaining the dough at about 25°C.

7. A method for preparing a dough according to claim 6, wherein the dough stirring steps add up to 7-8.5 minutes.

8. A method for preparing dough according to claim 6, wherein the dough stirring steps add up to 7.5-8 minutes.

9. A method for producing a bread product, the method comprising the following steps:
volumetrically cutting and shaping a dough according to claim 5, wherein the dough has been prepared by a method according to any of claims 6-8;
placing the volumetrically cut dough in a first ripening chamber under controlled conditions for assimilating and diffusing water into the dough without swelling the dough;
placing the ripened dough in baking containers;
passing the baking containers together with the dough contained in them to a second ripening chamber under controlled conditions and maintaining the containers in the second ripening chamber until the volume of the dough has at least doubled;
removing the baking containers together with the dough contained in them from the second ripening chamber;
routing the baking containers together with the dough contained in them to a baking oven under controlled conditions for baking the dough for producing the baked bread product;
exiting the baking containers together with the baked bread product from the baking oven; and
removing the baked bread product from the baking containers.

10. A method for producing a bread product, according to claim 9, the method further comprising the following steps:
placing a cover (lid) on the baking containers before routing the baking containers together with the dough contained in them into the baking oven for limiting the increase in volume of the bread product during baking so that the baked bread product takes the three-dimensional shape of the volume defined by the walls of the baking containers and the cover; and
removing the cover from the baking containers before removing the baked bread product from the baking containers.

11. A method for producing a bread product, according to any of claims 9 or 10, wherein:
the volumetric cutting of the dough produces pieces of cut dough of about 950gr;
the shaping of the pieces of the cut dough is done in a round shape;
the volumetrically cut and shaped dough is placed in the first ripening chamber for about 5min at about 22°C, at a relative humidity of about 40%;
the baking containers together with the dough they contain remain in the second ripening chamber for about 60min or more, at about 37°C, at a relative humidity of about 58%; and
the baking containers together with the dough they contain remain in the baking oven for approximately 29-30min, at approximately 360°C burner temperature, giving the baked bread product an internal temperature, upon exiting the oven, of approximately 96°C-98°C.

12. Method for producing a bread product, according to claim 11, wherein the baking oven imparts to the baked bread product an internal temperature, upon exiting the oven, of approximately 98°C.

13. A method for producing a bread product according to any of claims 8-12, the method further comprising transferring the baked bread product to a cooling chamber after removing it from the baking containers.

14. Method for producing a bread product, according to claim 13, wherein the baked bread product is kept in the cooling chamber for 70-80min, at about 20 °C -25°C, at a relative humidity of about 60%.

15. A bread product prepared by the method according to claim 14, wherein the bread product comprises:
air cells of uniform size of about 0.6-0.8mm, with a density of about 50-100 cells/cm²; and
raw materials and nutritional ingredients, which are included in the mixture according to any of claims 1-4.
